# EUROPEAN PATENT APPLICATION

(11) **EP 2 858 038 A2**
(43) Date of publication of application: **08.04.2015**
(21) Application number: 14186292.0
(22) Date of filing: 25.09.2014
(51) Int. Cl.: G06T 11/00

(54) **Editing image data**

(30) Priority: 30.09.2013 GB 201317288
(71) Applicant: Nokia Corporation, 02610 Espoo (FI)
(72) Inventor: Jantunen, Joni, 00500 Helsinki (FI)
(74) Representative: Nokia Corporation

(57) **Abstract**

There is provided a method comprising: presenting first image data to a user; detecting a first user reaction to the first image data; and determining how to modify image data in dependence on the first detected user reaction.

## Description

### Field of the Invention

This disclosure relates to determining how to modify image data.

### Background

In recent years, there has been an upsurge in the number of users that edit image data. Image data comprises at least visual data (e.g. still images and video data). Image data may also comprise audio data that accompanies the visual data. This partly results from the popularity of media sharing sites, which encourage users to create, edit and post image data online. Also, an increasing number of users participate in internet memes. As a result of this upsurge, several applications have been developed that allow users to edit their image data in a relatively simple and straightforward manner.

Many applications allow a user to superpose augmented reality images over an existing image. Augmented reality images may consist of, for example, graphic art (e.g. typography, painting, photography, drawings, etc.) or animation added to the image data. Augmented reality images can be added on top of image data in real time as well as during post processing. For example, an existing application is configured to insert a squirrel into the foreground of photos during post processing. This is based on a popular internet meme in which a squirrel (called "Nuts") appeared in the foreground of a family photo.

A lot of the applications that have been developed aim to assist a user with processing image data by reducing the amount of time that a user spends editing that image data.

### Summary

The present invention is defined by the appended independent claims. Certain more specific aspects of the invention are defined by the dependent claims.

According to a first aspect, there is provided a method comprising: presenting first image data to a user; detecting a first user reaction to the first image data; and determining how to modify image data in dependence on the first detected user reaction.

The method may further comprise: modifying said image data in dependence on the determination to create second image data; presenting second image data to a user; detecting a second user reaction to the second image data; and subsequently determining how to modify image data in dependence on only the second detected user reaction.

The method may further comprise: modifying said image data in dependence on the determination to create second image data; presenting second image data to a user; detecting a second user reaction to the second image data; and subsequently determining how to modify image data in dependence on both the first and the second detected user reactions.

The modification may comprise superposing another image over only part of an image defined by the first image data. The another image may comprise at least one of: still graphic art and animated graphic art.

Determining how to modify image data may comprise selecting a modification from a plurality of possible modifications. Determining how to modify said image data may further comprise using the first and/or second detected user reactions to define a subset of possible ways in which to modify said image data, and the selecting a modification comprises selecting a modification to be applied to said image data from the selected subset. The determining how to modify said image data may further comprise defining the subset in dependence on the objects detected in said image data.

Said image data may be the first image data.

Said image data may be third image data, the third image data being different to the first image data.

The method may further comprise: modifying said image data in dependence on the determination to create second image data; wherein the modification comprises modifying visual data of the image data. The modification may not comprise modifying audio data of the image data.

The determining may comprise: comparing the detected user reaction to a stored user reaction; and determining how to modify said other image data in dependence on the difference between the detected user reaction and the stored user reaction.

The determining how to modify image data may be performed in dependence on at least one of the following parameters associated with where or when said image data was initially obtained: the location said image data was initially obtained, the weather at that location, the time of day the image data was initially obtained; and the date the image data was obtained.

The determining how to modify image data may be performed in dependence on at least one of the following parameters: the user's current location, the weather at the user's current location, the time of day the determining step is performed; and the date the determining step is performed.

According to a second aspect, there is provided a computer program comprising code means adapted to cause performing of the steps of any of claims 1 to 15 when the program is run on data processing apparatus. In accordance with further embodiments apparatus and/or computer program product that can be embodied on a computer readable medium for providing at least one of the above methods is provided.

According to a third aspect, there is provided an apparatus comprising: at least one processor; and at least one memory including computer program code; the at least one memory and the computer program code configured to, with the at least one processor, cause the apparatus to at least: present first image data to a user; detect a first user reaction to the first image data; and determine how to modify image data in dependence on the first detected user reaction.

The at least one memory and the computer program code may be further configured to, with the at least one processor, cause the apparatus to: receive information on how to modify said image data from a server; and use said information when determining how to modify image data in dependence on the first detected user reaction.

The at least one memory and the computer program code may be further configured to, with the at least one processor, cause the apparatus to: compare the first detected user reaction to a stored user reaction; and transmit data to a server indicating whether the detected first user reaction is consistent with the stored user reaction.

According to a fourth aspect, there is provided a system comprising; the apparatus according to any of claims 17 to 19; and a server remote from the apparatus and configured to communicate with the apparatus.

According to a fifth aspect, there is provided an apparatus comprising: means configured to detect a first user reaction to the first image data; and means configured to determine how to modify image data in dependence on the first detected user reaction.

According to a sixth aspect, there is provided an apparatus comprising respective means configured to perform the actions of the method steps of the first aspect.

### Brief Description of the Drawings

Figure 1 shows a schematic diagram of a system where certain embodiments can be implemented;
Figure 2 shows an example of a user device;
Figure 3 shows an example system;
Figure 4 shows a flow chart depicting aspects;
Figure 5 shows a flow chart depicting aspects;
Figure 6 shows an example system;
Figures 7a and 7b show aspects; and
Figure 8 shows a flow chart depicting aspects.

### Detailed Description

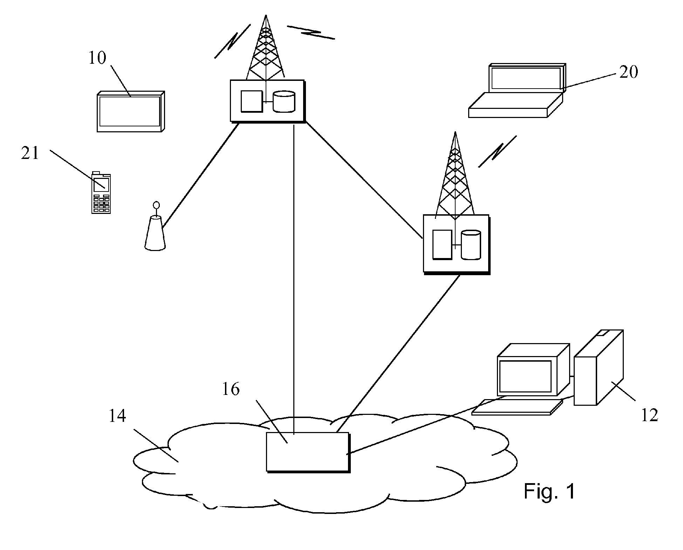

In the following certain exemplifying embodiments are explained with reference to wireless or mobile communication devices and/or user devices that are communicating. Therefore, before explaining in detail the exemplifying embodiments, certain general principles of a wireless communication system and access thereto, and communication devices are briefly explained with reference to Figure 1 to assist in understanding the technology underlying the described examples.

A communication system can be seen as a facility that enables communications between two or more nodes such as fixed or mobile communication devices, access points such as base stations, servers and so on. Signals can be carried on wired or wireless carriers. Examples of wireless systems include public land mobile networks (PLMN) such as cellular networks, satellite based communication systems and different wireless local networks, for example wireless local area networks (WLAN). A user can access the communication system by means of an appropriate communication device or terminal (also known as user equipment). A communication device is provided with an appropriate signal receiving and transmitting arrangement for enabling communications with other parties. Typically a communication device is used for enabling receiving and transmission of communications such as voice, images, video and other data. A communication device of a user is often referred to as user equipment (UE). Communication devices or terminals can be provided wireless access via base stations or similar wireless transmitter and/or receiver nodes providing radio service areas or cells. The wireless communication devices 10, 20 and 21 may comprise any suitable device capable of wireless communication of data. A fixedly connected user terminal 12 is also shown.

The user can be provided with various services via a communication system and terminal devices. Non-limiting examples of the services include two-way or multi-way calls, data communication or multimedia services or simply an access to a data communications network system, such as the Internet. In the herein described scenario current the users are provided with the possibility to experience media content such as music, videos, multimedia and so on based on playlists managed by a controller 16 in a data network system 14. A more particular example of such services is streaming services. In the herein described examples the streaming service enables social interaction between the users. The controller can be provided e.g. by an application server managed by a service provider.

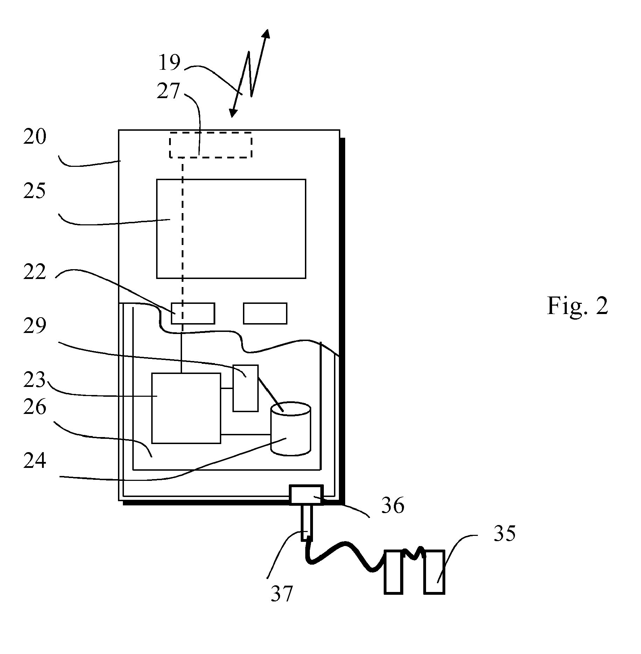

The users may receive data content and communicate with the application server and other users via a variety of different user devices. Figure 2 shows a schematic, partially sectioned example of a communication device 20 that can be employed in the herein described examples. Such a communication device is often referred to as user equipment (UE) or terminal. An appropriate communication device may be provided by any device capable of sending and receiving signals. Non-limiting examples include a mobile station (MS) such as a mobile phone or what is known as a 'smart phone', a portable computer such as a laptop or a tablet computer provided with a wireless interface card, USB sticks with wireless capabilities or "dongles", or other wireless interface facility, personal data assistant (PDA) provided with wireless communication capabilities, or any combinations of these or the like. A mobile communication device may provide, for example, communication of data for carrying communications such as voice, electronic mail (email), text message, multimedia (images, audio and video), positioning data, other data, and so on. As shown in Figure 1, a user may also access the system via a fixed line connection e.g. from a desktop computer 12.

A terminal device is typically provided with at least one data processing entity 23, at least one memory 24 and other possible components 29 for use in software and hardware aided execution of tasks it is designed to perform, including control of access to and communications with e.g. application servers and other communication devices. The data processing, storage and other relevant control apparatus can be provided on an appropriate circuit board and/or in chipsets. This feature is denoted by reference 26. The user may control the operation of the mobile device by means of a suitable user interface such as key pad 22, voice commands, touch sensitive screen or pad, combinations thereof or the like. A display 25, a speaker and a microphone are also typically provided. A still and/or video camera may also be provided. Furthermore, a communication device may comprise appropriate connectors (either wired or wireless) 36 other devices and/or for connecting external accessories, for example headsets, hands-free equipment, wearable accessories such as wristwatches, multimedia glasses and so on, thereto. Figure 2 shows a pair of earpieces 35 connected to device 20 via a connector plug 37 and a socket 36.

The mobile device may receive and transmit dedicated signals 19 by the stations of Figure 1 via appropriate apparatus for receiving and transmitting signals. Figure 2 transceiver apparatus is designated schematically by block 27. The transceiver may be provided for example by means of a radio part and associated antenna arrangement. The antenna arrangement may be arranged internally or externally to the mobile device. A wireless communication device can be provided with a Multiple Input / Multiple Output (MIMO) antenna system.

The following describes examples in which image data is presented to a user. The user reacts to the image data. This user reaction is an emotional reaction to the presented image data. The user reaction to the image data is detected by a device. In dependence on the detected user reaction, it is determined how to modify image data. The image data to be modified may be the initially presented image data or different image data.

Certain examples will now be described in further detail with reference to the accompanying drawings.

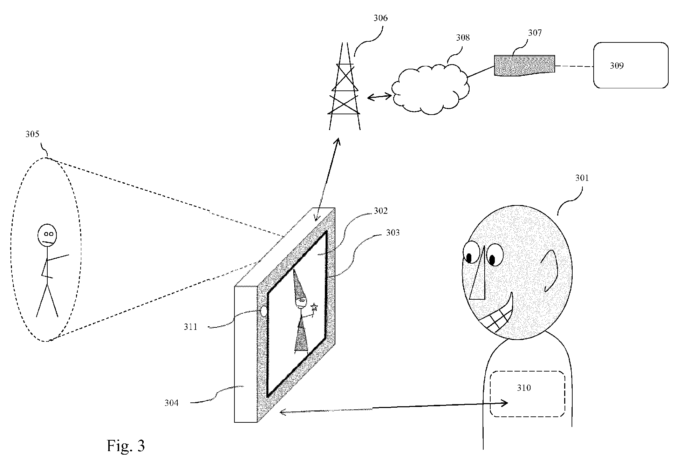

Figure 3 illustrates a user 301 viewing an image 302 on a screen 303 of user equipment 304. The user equipment may be as described above. The user equipment comprises a rear-view camera (not shown), which is used to detect an image in its field of view 305. A rear-view camera is a camera that is positioned on the opposite side of the user equipment to the screen. The image 302 displayed on the screen 303 differs from the image in the field of view 305 of the rear view camera. Image 302 was formed by superposing graphical images over the image in field of view 305. In particular, a wizard's hat, robes and a wand have been superposed over the image in the field of view 305 of the camera to form the image 302 displayed on the screen 303. The user equipment is configured to communicate wirelessly with network 306. The network 306 communicates with a server 307 in a cloud 308. The term cloud denotes a distributed computing architecture. The network 306 optionally communicates with a remote user 309. The remote user 309 may be a moderator.

The user 301 viewing the image 302 is optionally fitted with sensors 310. The sensors 310 are arranged to wirelessly communicate with the user equipment 304. Preferably a short range communication protocol is used for this communication, such as Bluetooth. However, any appropriate communication protocol may be used.

The user equipment is optionally fitted with a front-view camera 311. A front view camera is a camera that detects scenery facing the screen 303 and can take an image thereof. In other words, a front view camera has a lens positioned on the same side of the user equipment 304 as the screen 303.

The system depicted in figure 1 operates as follows. The user 301 causes the rear view camera of the user equipment 304 to detect an image in field of view 305. This image is modified and displayed to the user 301 as modified image data 302 on display screen 303. The image 302 displayed on the screen 303 may not comprise the entire field of view 305. In other words, it may be that only part of the image defined by field of view 305 is displayed to the user 301. Possible modifications to image data include at least: the insertion of a speech bubble (with appropriate text) to tell a story; superposing clothes and facial features on top of detected humans/animals (for example, if a face is detected, the application may add a tremulous moustache that eventually flies away); inserting objects (such as humans, animals and scenery); and inserting audio data (such as 3D audio data). It is also possible for the modifications to aim to tell a specific story. The specific story may be customised to a particular brand.

The user equipment 304 is arranged to detect the reaction of the user 301 to the modified image data 302. The user reaction is an emotional reaction to the image data viewed by the user. The user reaction may be detected using the optional front view camera 311. The user reaction may be detected using a microphone on the user equipment. The user reaction may be detected using the optional sensors 310. Once detected, the user reaction is determined by comparing the obtained data to a database of behavioural data that links detected bodily changes to a reaction. For example, one particular set of muscle contractions on the face may indicate a frown, whilst another set of muscle contractions indicates a smile. Eye dilation, audio data (e.g. laughter), heart rate and torso movement may also be monitored to provide data indicative of a user reaction. The behavioural data may be updated so as to customise the database to specific users. This customised database information may be cached locally. The user reaction may be determined locally (e.g. at the user equipment 304) or remotely (e.g. at server 307). It is also possible to obtain a user reaction by simply asking the user to input a reaction to the user equipment 304. For example, the user equipment may be configured to ask the user 301 to "like" or "dislike" a particular modification. However, it is preferred that the user equipment 304 automatically detects a user reaction as it speeds up the editing time by reducing the amount of user input required to edit the image.

When subsequent image data is received, the user equipment 304 is configured to modify this subsequent image data. The subsequent image data is any data captured in field of view 305 after a user reaction to a first modification of image data has been detected. The subsequent image data is modified to form modified image data in dependence on the previously determined user reaction. There is a wide variety of possible modifications that could be made to the subsequent image data. A determined user reaction can be used to reduce this number of potential modifications. In other words, the determined user reaction can be used to define a subset of possible modifications that could be applied to the subsequent image data. A single modification may then be selected from the defined subset. The selected modification may be selected randomly, pseudorandomly, or by using any appropriate selection algorithm. Alternatively, each possible modification may be assigned possible weights, which determine the likelihood of being selected. Each modification may be associated with a finite probability of being selected. The selected modification is applied to the subsequent image data. The modified subsequent image data is displayed to user 301 using screen 302. A user reaction to this modified subsequent image data may be detected and determined in accordance with the principles described above.

Over time, a database of user reactions to a plurality of modified image data may be built up. This database may be used to customise the possible modifications available to the user. This database may also be used to determine the most popular modifications across a plurality of users. Data from users exhibiting similar reactions may be used to affect the selection of possible modifications available to a user.

The above described method can be applied using processing functionality in the user equipment alone. The above described method can also be applied using processing functionality in the user equipment 304 and server 307 in network 306.

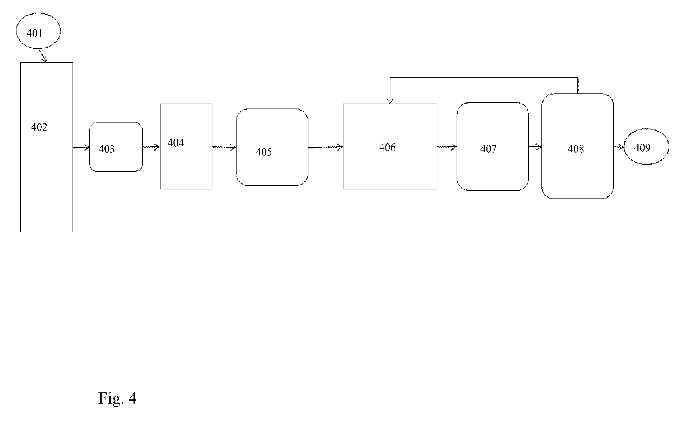

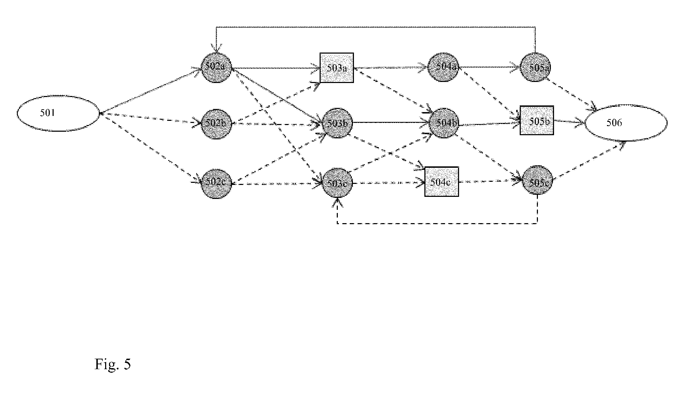

The image data and subsequent image data may be modified in accordance with a theme in order to tell a story. This may require a series of linked potential modifications. An embodiment of this is illustrated with reference to figures 4 and 5. In figure 4, the operation starts at 401. At 402, a full list of potential storylines is available. Optionally, pre-obtained user reaction data is used to select between a subset of these potential storylines, or otherwise alter the likelihood of a particular potential storyline of being chosen. The user reaction data may have been obtained from user 301 or may have been obtained from other users.

At 403, the image to be modified is analysed and a variety of input parameters obtained. For example, the image may be analysed to determine the number of people, the objects available in the surrounding area and their spatial arrangement, whether there is any movement of the objects, etc. Information obtained from the analysis can be used as input parameters. Alternatively or in addition, the input parameters comprise information about the user 301, such as the age of the user. This information may be inputted by a user following a prompt. This information may be obtained by analysing the information obtained by a front view camera or by any other means.

At 404, the obtained input parameters are used to select a subset of potential storylines from the list of storylines obtained in step 402. A storyline from the subset obtained in step 404 is selected and used at step 405 to modify the image data. At step 405, augmented reality objects are superposed on the image detected in field of view 305 in accordance with the selected storyline. As the image detected in field of view 305 changes, corresponding modifications may be made to the image in line with the selected story. This is illustrated at step 406 and is further discussed in relation to figure 5 (below).

At 407, the reaction of the user to the various modifications is detected and determined. This reaction is stored as reaction data in memory. The memory is preferably located at the user equipment 301. The reaction data may be transmitted to server 307 in network 306.

At 408, the determined user reactions (from 407) are used to select new storyline data based on the current input parameters and the storyline selected in 405. The new storyline data may be wholly distinct from the previously selected storyline based on current input parameters determined from the current image data from field of view 305. Alternatively, the new storyline data may be a continuation of the currently selected storyline and act to "move" the story along. Steps 406 to 408 may be repeated until 409 when the process ends. The process ends when it is terminated by a user. Alternatively, or in addition, the process ends when the user equipment is unable to detect input parameters that correspond to a potential storyline.

Figure 5 depicts a possible progression of a storyline. The example depicted in figure 5 is preferably performed at step 406 in figure 4. The ovals in figure 5 represent the start 501 and end 506 of the story line. These are considered to be events that modify the storyline as they respectively represent the introduction and cessation of introducing objects into the image detected in field of view 305. The circles in figure 5 represent an event that modifies the storyline. This could be, for example, the addition of a new objection, a change in motion of an existing object (start/stop), the removal of an object and a possible plot turn. The squares in figure 5 are also events that modify the storyline. However, the squares also indicate that it is particularly important to collect the user's reaction. In certain embodiments, the user's reaction is only detected and determined at these critical points (i.e. the squares in figure 5). Alternatively, the user's reactions are detected and determined at each of the events that modify the storyline (i.e. at both the circle and the square events). In this case, for greater accuracy, more information may be gathered at the square events compared to the circle events in order to determine the user's reactions. Alternatively, the user's reactions are detected and determined continuously. In this case, for greater accuracy, more information may be gathered at times at which the storyline is modified (i.e. at circle and square events) than at other times.

The storyline starts at 501. Once started, there are three possible ways in which the story could continue (represented by 502a, 502b and 502c). These are all circle events that modify the storyline. If the story proceeds by the selection of 502a, the next possible modifying events are square event 503a and circle events 503b and 503c. If the story proceeds by the selection of 502b, the next possible modifying events are square event 503a and circle event 503b. If the story proceeds by the selection of 502c, the next possible modifying events are circle events 503b and 503c.

If the story proceeds by the selection of 503a, the next possible modifying events are circle events 504a and 504b. If the story proceeds by the selection of 503b, the next possible modifying events are circle event 504b and square event 504c. If the story proceeds by the selection of 503c, the next possible modifying events are circle event 504b and square event 504c.

If the story proceeds by the selection of 504a, the next possible modifying events are circle event 505a and square event 505b. If the story proceeds by the selection of 504b, the next possible modifying events are square event 505b and circle event 505c. If the story proceeds by the selection of 504c, the only possible modifying event is circle event 505c.

If the story proceeds by the selection of 505a, the next possible modifying events are a return to circle event 502a or the end of the storyline at 506. If the story proceeds by the selection of 505b, the only possible modifying event is the end of the storyline at 506. Finally, if the story proceeds by the selection of 505c, the next possible modifying events is a return to circle event 503c or the send of the storyline at 506.

In figure 5, the solid lines represent a possible storyline (from start 501 to end 506) that is presented to a user whilst the dashed lines represent the additional options along which the storyline might have proceeded. In the present example, a user is presented with a story that starts at 501. Subsequently, the image is modified in accordance with event 502a. The image is further modified in accordance with event 503a. Subsequent to the modification in 503a, the image is modified first by event 504a before being modified by event 505a. The image is subsequently modified in accordance with event 502a before being modified by event 503b. Subsequent to the modification of event 503b, the image is modified in accordance with 504b before being modified by 505b. Finally, the process ends at 506.

The linked sequences of possible modifications are preferably arranged to tell a particular story. For example, if the story of Cinderella is to be told, a first modification may be to superpose rags over the clothing of one of the people in the field of view. Another person may be modified to resemble a fairy godmother. A subsequent linked modification (to move the story along) may be to insert an appropriate speech bubble (or audio track) into the image data so that the fairy godmother declares that Cinderella shall go to the ball.

The example depicted in figure 5 is for illustrative purposes only. It is understood that there can be more than three possible options for proceeding with a storyline at any one time. Also, other modifications may have been selected to tell a different story.

Location data can be used to customise the potential modifications and/or storylines available to the user equipment. For example, the culture and/or environment of the region the user is currently in may be used as factors in selecting a potential storyline or modifying event. Image data may be modified using characters and/or storylines appearing recently and/or frequently on the local news. On a smaller level, groups of people may have specific storylines based on insider jokes. This would be the case if a group of students had jokes about certain locations on campus. A user may elect to join particular groups. Certain groups (such as a location group) may be automatically assigned. Certain groups (such as a location group or a student group) may be selected by a user. The original geographical location of the user (the home location) may also be used as a factor in selecting a potential storyline or modifying event.

The selection of a storyline may depend on the exact location where the image data to be modified was (or is being) captured (e.g. coffee shop, library, etc.). Potential objects present in the image data may be determined beforehand using information regarding where the image data was (or is being) captured. Further, such information may be used to more quickly determine what objects are present in the image data. The exact location the image data was captured can be determined using any appropriate information means, such as geotag data associated with the image data. The direction in which the camera is pointed may affect which storyline is selected in a similar way. The direction in which the camera is pointed can be detected using sensors, positioning data or both. For example, many smart phones and tablets are designed to rotate their displayed image in the event they detect they have been rotated in a predetermined manner. The information used to detect this may be considered an example of positioning data. The direction in which the camera is pointed may alternatively or in addition be detected from the image data itself.

The location data is one possible parameter that can be used to determine how to modify image data. Other parameters can be used to determine how to modify the image data. Example parameters include the time of day, the time of year, weather information, temperature, etc. The parameters may be determined using the place and/or time the image data was obtained. Alternatively or in addition, the parameters may be determined using the current location of the user and the time when the image data is to be modified. One possible modification to image data displaying people on a beach, using the temperature, weather and location parameters, would be to add winter clothing to people if the weather is sunny and the temperature is high. At least one of the parameters may be used to set a default configuration for the modification type. For example the application may automatically select storylines from the horror genre if the image data was captured at night. The default configuration may be turned on, turned off and/or modified by a user 301.

An effect of the above is to provide a convenient way to edit image data. By determining the modifications to be made to image data in dependence on detected user reactions, the user equipment is able to edit the image data in a way in which the user is likely to enjoy. If the user does not like the resulting edited image data, this will be detected. The user may then re-run the original image data through the modifying program running on the user equipment that modifies the image data. The updated user reactions may be used by the program to select alternative modifications. It is also beneficial to retain a degree of randomness when selecting between multiple possible modifications or storylines.

The user equipment is preferably configured to record and store the modified image data so that it can be displayed to a user again. Preferably the stored modified image data can be forwarded to other users and/or be uploaded to a website.

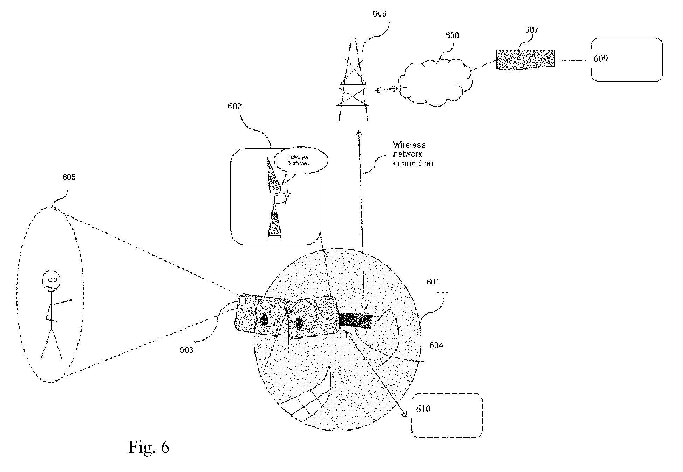

Figure 6 illustrates an aspect in which the user equipment 304 is smart glasses. The smart glasses are labelled as 604 in figure 6. The smart glasses differ from the user equipment depicted in figure 3 in that they are not configured to detect at least a substantial part of the user's face whilst the described operations are being performed. The smart glasses 604 may be any user equipment that is not configured to detect at least a substantial part of the user's face whilst the described operations are being performed. For simplicity, the following describes such user equipment 604 as not comprising a front-view camera that can detect at least a substantial part of the user's face whilst the described operations are being performed. However, it is understood that such user equipment may comprise such a front view camera.

In figure 6, the user 601 is wearing smart glasses 604. The image 602 that is presented to user 601 is depicted above the head of the user. The image 602 may be projected into the eye of the user 601. The user equipment 604 comprises a rear view camera 603. The rear view camera 603 has a field of view 605 that can define an image. The image defined by the field of view 605 appears as image 602 to the user. Image 602 differs from the image defined by the field of view 605 of the rear view camera 603 in that the person in the image defined by the field of view 605 has been modified to include a wizard's hat, robes and a wand and a speech bubble has been inserted that reads "I give you 3 wishes". The user equipment is configured to communicate with at least one network. In the embodiment of figure 1, the user equipment is configured to communicate wirelessly with network 606. The network 606 communicates with a server 607 in a cloud 608. The term cloud denotes a distributed computing architecture. The network 606 optionally communicates with a remote user 609. The remote user 609 may be a moderator.

The user 601 viewing the image 602 is optionally fitted with sensors 610. The sensors 610 are arranged to wirelessly communicate with the user equipment 604. Preferably a short range communication protocol is used for this communication, such as Bluetooth. However, any appropriate communication protocol may be used.

The operation of the embodiment of figure 6 is substantially as described above in relation to figures 3 to 5. The only difference is that the user's reactions may be slightly more difficult to determine without the use of a front view camera that can detect at least a substantial part of the user's face 601. However, some reactions may be detected using the user's eyes (i.e. dilation of pupil, change of shape of eye, etc.). Wireless sensors and microphones may also be used (as described above) to provide information on a user's reaction.

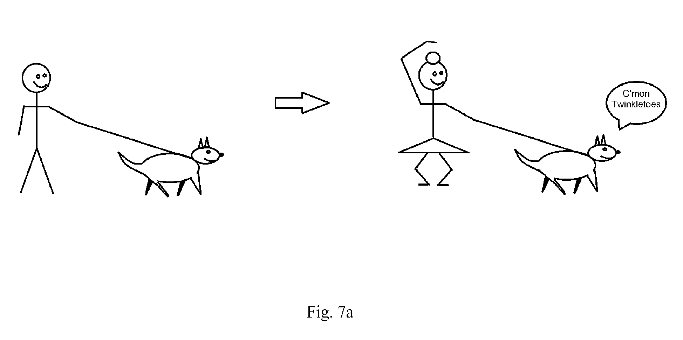

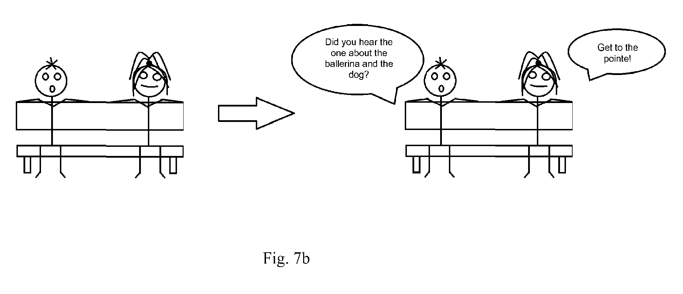

Examples of ways in which an image may be modified are provided in figures 7a and 7b.

In figure 7a, the rear view camera has a man walking a dog in its field of view. In dependence on this view, the user equipment detects that there is a person walking, an animal walking, that the movement of both the person and the dog is from left to right and that the environment is unknown or otherwise undefined. These detections are used as input parameters to select a "story" or some other modification of the image. Any previous user reaction data that is available to the user equipment may be used to determine how to modify an image. In the image presented to the user (e.g. 302 or 602), the person (walking) is modified to resemble a ballerina. Also in the image presented to the user, a speech bubble has been inserted to imply that the dog is saying "C'mon Twinkletoes"

In figure 7b, the rear-view camera has a couple of people seated on a bench in the park in its field of view. In response to this image, the user equipment detects that there are two people seated, that there is no movement and that the surrounding environment is a park. These detections are used as input parameters to select a "story" or some other modification of the image. Any previous user reaction data that is available to the user equipment may be used to determine how to modify an image. In the image presented to the user in this example, speech bubbles have been inserted to imply that each person detected in the field of view of the camera is talking. In figure 7b, one speech bubble reads "Did you hear the one about the ballerina and the dog", whilst the other reads "Get to the pointe!"

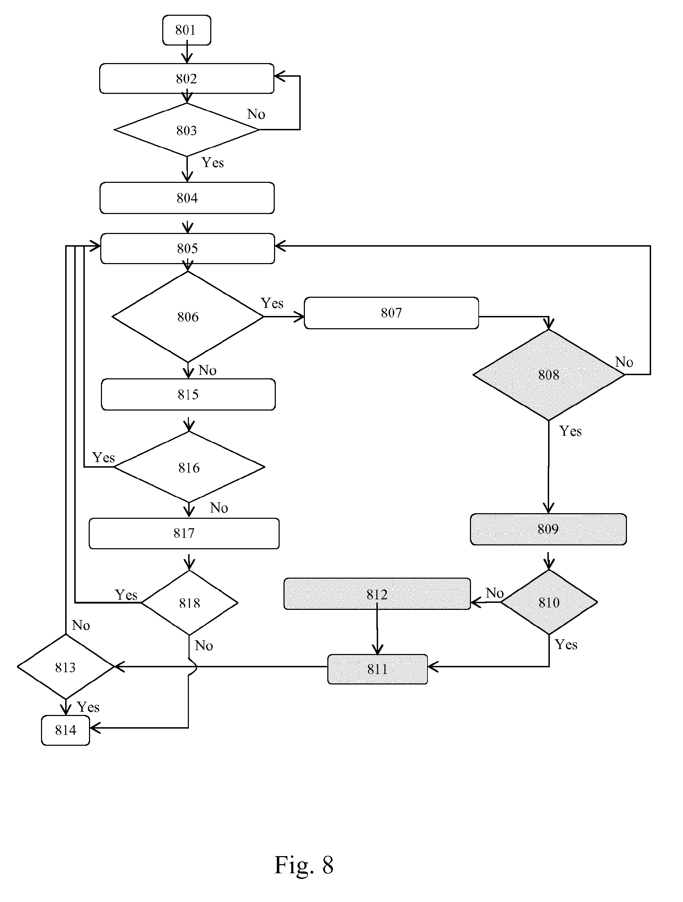

A flowchart depicting one possible range of operations performed by a device (e.g. user equipment) operating in accordance with the principles of the present invention is shown in figure 8. Figure 8 relates to the insertion of augmented reality objects with the intention of eliciting amusement (most notably laughter) from a user. When an element (e.g. any of 801 to 818) of the operation of figure 8 is currently being executed, this may be indicated to the user. This may be indicated to the user using a marker superposed onto the camera view. This may be indicated to the user via some audio cue. Visual markers may remain in view following the execution of the associated element (801 to 818) of figure 8.

At 801, the device starts the operation. At 802, the user equipment is arranged to detect objects in a camera views.

At 803, the detected objects are used as input parameters to select a potential storyline e.g. a sequence of potential modifications. If the combination of detected objects do not result in a potential storyline being identified, the device returns to 802 to continue detecting objects in the camera view until a combination of objects is detected that does cause a potential storyline to be identified. When multiple potential storylines are identified as matching the current combination of object input parameters, one of these storylines is randomly selected. When only one possible potential storyline identified, this one potential storyline is selected.

In dependence on the selected storyline, the image is modified at 804 by superposing at least one augmented reality object onto the original image data from the rear-view camera and displaying to the modified image to the user.

At step 805, objects are again detected in the field of view of the rear-view camera.

At step 806, it is determined whether the objects detected at 805 are consistent with the selected storyline.

If it is determined at step 806 that the objects detected in 805 are consistent with the selected storyline, the device proceeds to 807. At 807, the image being displayed to the user is updated. This causes the update of both the superposed object and any image data from the camera view that is being displayed to a user.

At 808, the device determines whether the user is expected to laugh at any particular modification of the image data. If the user is not expected to laugh at a particular modification, the device returns to step 805. If the user is expected to laugh at a particular modification, the device is configured to collect information about the user's reaction to that modification at 809, when that particular modification is displayed to the user.

At 810, the device determines whether the detected user reaction was as expected. For example, the device could determine whether or not the user laughed when the particular modification was displayed. The device could determine whether the user smiled. To determine whether the detected user reaction was as expected, the device preferably compares the collected user reaction information to a list of parameters that define a particular user reaction. For example, if the user is expected to laugh, this could result in a particular audio track, a flaring of nostrils, a narrowing of the eyes, a contraction of facial muscles that defines a smile and moving shoulders. These actions could all be defined by a set of parameters associated with each action. The device may store parameters for a particular reaction locally. The device may also modify the stored parameters to customise the reaction parameters to a particular user. For example, some users may react to stimuli more subtly than other users.

If the determined user reaction was as expected, the device updates its statistics at 811.

If the determined user reaction was not as expected, the device proceeds to 812. At 812, the device is configured to re-select the storyline or reconfigure the projected sequence of events of the storyline in order to display something more suited to the user's tastes. This change in storyline is performed in dependence on the mismatch determined when comparing the expected and determined user reactions in step 810.

After 812, the device proceeds to update its statistics at 811.

After 811, the device proceeds to 813. At 813, the device determines whether or not the current storyline is due to terminate soon. If so, the device stops superposing augmented reality images on top of current camera data at 814. If the current storyline is not due to terminate soon, the device returns to step 805.

If at 806 it is determined that the detected and superposed images do not match the theme of, or are otherwise inconsistent with, the current storyline, the device proceeds to 815 instead of to 807.

At 815, the objects superposed over the real image are updated in the camera view finder.

At 816, the device determines whether or not the detected objects and the superposed objects are consistent with the currently selected storyline. In determining whether these objects are consistent with the currently selected storyline, the device may also determine the degree of mismatch between the objects and the currently selected storyline. If it is determined that they are consistent, the device returns to step 805. If it is determined that they are not consistent, the device proceeds to 817.

At 817, the device re-selects or modifies the current storyline in dependence on the degree of mismatch between the objects and the current storyline. Other input parameters, such as the user's age and/or any previous data regarding the user's reaction to a previously modified image, may also be used to re-select or modify the current storyline.

At 818, the device determines whether or not it is possible to continue with the current storyline i.e. the current sequence of potential modifications to be made to the image data. If it is determined that it is possible to continue with the current storyline, the device may return to step 805. If it is determined that it is not possible to continue with the current storyline, the device proceeds to terminate its modification of the image at 813.

According to yet another example appropriate apparatus or means are provided for presenting first image data to a user; detecting a first user reaction to the first image data; and determining how to modify image data in dependence on the first detected user reaction.

Further provided are means for modifying said image data in dependence on the determination to create second image data; presenting second image data to a user; detecting a second user reaction to the second image data; and subsequently determining how to modify image data in dependence on only the second detected user reaction.

Further provided are means for modifying said image data in dependence on the determination to create second image data; presenting second image data to a user; detecting a second user reaction to the second image data; and subsequently determining how to modify image data in dependence on both the first and the second detected user reactions.

The modification may comprise superposing another image over only part of an image defined by the first image data. The another image may comprise at least one of: still graphic art and animated graphic art.

Determining how to modify image data may comprise selecting a modification from a plurality of possible modifications. Determining how to modify said image data may further comprise using the first and/or second detected user reactions to define a subset of possible ways in which to modify said image data, and the selecting a modification comprises selecting a modification to be applied to said image data from the selected subset. The determining how to modify said image data may further comprise defining the subset in dependence on the objects detected in said image data.

Said image data may be the first image data.

Said image data may be third image data, the third image data being different to the first image data.

Further provided are means for modifying said image data in dependence on the determination to create second image data; wherein the modification comprises modifying visual data of the image data. The modification may not comprise modifying audio data of the image data.

The determining may comprise: comparing the detected user reaction to a stored user reaction; and determining how to modify said other image data in dependence on the difference between the detected user reaction and the stored user reaction.

The determining how to modify image data may be performed in dependence on at least one of the following parameters associated with where or when said image data was initially obtained: the location said image data was initially obtained, the weather at that location, the time of day the image data was initially obtained; and the date the image data was obtained.

The determining how to modify image data may be performed in dependence on at least one of the following parameters: the user's current location, the weather at the user's current location, the time of day the determining step is performed; and the date the determining step is performed.

In the above described examples, it is preferable that the entire image captured by field of view 305, 605 is used to select a storyline and/or a modifying event. This is regardless of whether or not only a portion of the image defined by field of view 305, 605 is subject to modification.

The modification of image data may hint or otherwise imply to a user that the user equipment 304, 604 should be moved in order to develop the storyline. One way of achieving this is to imply that something interesting is happening outside of the currently presented image data. Any subsequent movement of the user equipment 304, 604 (or user's head in case of smart glasses) can be used to further modify any newly captured image data. As an example, if the image is modified to include a creature, the creature may appear to be looking to the right edge of camera view i.e. outside of the camera view. If the user moves the camera to the right, a new object (e.g. a train) may be added to the currently captured image data. Alternatively, the creature may appear to be looking up. In this case, if the user moves the camera view up, there may be an object (e.g. a UFO) in the sky. Additionally, a user's reactions to such hints can be stored in order to determine if a certain hint is working as desired. Multiple user reactions to such hints can be stored and used in order to determine if a certain hint is working. If there is a poor match between the current image data being captured and the available storylines, the application may use such hints to attempt to collect further information about the surrounding environment. This further information may be used to determine what objects are present in the image data.

In the above, the optional sensors 310, 610 have been described as being remote from the user equipment and communicating wirelessly with it. The optional sensors 310, 610 may alternatively be integrated into the user equipment itself. In this case, the optional sensors 310, 610 may be configured to communicate with the user equipment using a wired link or they may be configured to communicate with the user equipment wirelessly.

The above described embodiments all depict making modifications of real-time image data acquired by the device on which the modified image data is displayed to a user. However, the modification process could be performed on non-real time image data. Also, the modification process could be performed on image data (both real-time and non-real-time) originating from another device.

In the above described embodiments, references to audio data can also encompass 3D audio data. 3D audio data is audio data that can be played on stereo speakers to give the effect that different sounds in the 3D audio data originate from different locations.

In the above described embodiments, the image data can be captured using a 3D-camera (also known as a stereo-camera). This allows for relative distances between objects and distances between the camera and the objects to be determined more accurately.

Although embodiments of the present invention have been described above with reference to superposing image data over a detected image, the mechanisms described apply equally to any modification to a detected image. For example, a face may be rotated using a particular algorithm or the image may be at least partly modified to give a particular effect e.g. sepia. Similarly, although the above has been described in relation to modifying image data in real-time, it should be understood that the above described techniques may also be applied to a non-real-time image data. For example, an existing image or video may be provided to an application which provides the modified image data as an output.

It should also be noted that although modifications to the image data are described above via the addition of visual images (such as augmented reality objects), modifications to the image data may also comprise: removing object data; removing audio data; and adding audio data. Any audio data associated with the visual image data may be played at the same time as the visual image data.

Preferably, in all of the above described embodiments, the user has no active input on the way in which an image is to be modified. Instead, the modification is performed at least in dependence on the user's reactions to a previous modification. In a preferred embodiment, the user may be asked to select the genre of modification to make before the first image is modified when the program is activated e.g. horror, romance, comedy, etc.

A marker may be inserted into the modified image 602 displayed to the user to alert the user to the fact that image modification is taking place.

In embodiments of the above described system, the determination of how to modify the image is performed in dependence on a local user's reaction to the presented information. The determination of how to modify the image may additionally depend on a remote user. The remote user could act as a moderator to direct the story for someone else. Alternatively, or in addition, the reactions of multiple users may be aggregated to determine how to modify the image. One way in which this may be used would be to aggregate the reactions of multiple users to determine whether a particular storyline has the intended effect. For example, if laughter is expected at a particular modification but the system records that only a small percentage of users actually laugh, this modification may be removed, replaced or modified.

Further, although the above described embodiment depicts the user equipment as communicating wirelessly with a network, it should be understood that this connection may be replaced with a wired connection.

The required data processing apparatus and functions at the relevant devices may be provided by means of one or more data processors. The described functions may be provided by separate processors or by an integrated processor. The data processing apparatus may be of any type suitable to the local technical environment, and may include one or more of general purpose computers, special purpose computers, microprocessors, digital signal processors (DSPs), application specific integrated circuits (ASIC), gate level circuits and processors based on dual-core or multi-core processor architecture, as non-limiting examples. The data processing may be distributed across several data processing modules. A data processor may be provided by means of, for example, at least one chip. Appropriate memory capacity can also be provided in the relevant devices. The memory or memories may be of any type suitable to the local technical environment and may be implemented using any suitable data storage technology, such as semiconductor based memory devices, magnetic memory devices and systems, optical memory devices and systems, fixed memory and removable memory, including appropriate types of random access memory (RAM) and read-only memory (ROM).

In general, the various embodiments may be implemented in hardware or special purpose circuits, software, logic or any combination thereof. Some aspects of the invention may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, for example for controlling communications, user interface, and data processing, general purpose hardware or controller or other computing devices, or some combination thereof. The software may be stored on such physical media as memory chips, or memory blocks implemented within the processor, magnetic media such as hard disk or floppy disks, and optical media such as for example DVD and the data variants thereof, CD, and a cloud storage arrangement.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

## Claims

1. A method comprising:
presenting first image data to a user;
detecting a first user reaction to the first image data; and
determining how to modify image data in dependence on the first detected user reaction.

2. A method as claimed in claim 1 further comprising;
modifying said image data in dependence on the determination to create second image data;
presenting second image data to a user;
detecting a second user reaction to the second image data; and subsequently determining how to modify image data in dependence on at least one of: the second detected user reaction and both the first and the second detected user reactions.

3. A method as claimed in claim 2, wherein the modifying comprises superposing another image over only part of an image defined by the first image data.

4. A method as claimed in claim 3, wherein the another image comprises at least one of: still graphic art and animated graphic art.

5. A method as claimed in any preceding claim, wherein determining how to modify image data comprises selecting a modification from a plurality of possible modifications.

6. A method as claimed in claim 5, wherein the determining how to modify said image data further comprises using the first and/or second detected user reactions to define a subset of possible ways in which to modify said image data, and the selecting a modification comprises selecting a modification to be applied to said image data from the selected subset.

7. A method as claimed in claim 6, wherein the determining how to modify said image data further comprises defining the subset in dependence on the objects detected in said image data.

8. A method as claimed in any preceding claim, wherein said image data is at least one of: the first image data and the third image data.

9. A method claimed in any preceding claim, further comprising;
modifying said image data in dependence on the determination to create second image data;
wherein the modification comprises modifying visual data of the image data.

10. A method as claimed in claim 9 wherein the modification does not comprise modifying audio data of the image data.

11. A method as claimed in any preceding claim, wherein the determining how to modify image data in dependence on the first detected user reaction further comprises:
comparing the detected user reaction to a stored user reaction; and
determining how to modify said other image data in dependence on the difference between the detected user reaction and the stored user reaction.

12. A method as claimed in any preceding claim, wherein the determining how to modify image data is performed in dependence on at least one of the following parameters associated with where or when said image data was initially obtained: the location said image data was initially obtained, the weather at that location, the time of day the image data was initially obtained; and the date the image data was obtained.

13. A method as claimed in any preceding claim, wherein the determining how to modify image data is performed in dependence on at least one of the following parameters: the user's current location, the weather at the user's current location, the time of day the determining step is performed; and the date the determining step is performed.

14. A computer program code configured to realize the actions of the method of any of claims 1 to 13 when executed by a processor.

15. An apparatus comprising means for performing the actions of the method according to any of claims 1 to 13.
